# EUROPEAN PATENT SPECIFICATION

(11) **EP 2 852 234 B1**
(45) Date of publication and mention of the grant of the patent: **12.02.2020**
(21) Application number: 13790091.6
(22) Date of filing: 15.05.2013
(51) Int. Cl.: H04W 72/04, H04L 5/00, H04L 27/26, H04W 48/16, H04W 72/00

(54) **TERMINAL, COMMUNICATION METHOD AND INTEGRATED CIRCUIT**
ENDGERÄT, KOMMUNIKATIONSVERFAHREN UND INTEGRIERTER SCHALTKREIS
TERMINAL, PROCÉDÉ DE COMMUNICATION ET CIRCUIT INTÉGRÉ

(30) Priority: 18.05.2012 JP 2012114488
(43) Date of publication of application: 25.03.2015
(73) Proprietor: Sharp Kabushiki Kaisha, Osaka-shi, Osaka 545-8522 (JP)
(72) Inventor: NOGAMI, Toshizo, Osaka 545-8522 (JP); SHIMEZAWA, Kazuyuki, Osaka 545-8522 (JP); IMAMURA, Kimihiko, Osaka 545-8522 (JP)
(74) Representative: Müller-Boré & Partner Patentanwälte PartG mbB
(86) International application number: PCT/JP2013/063510
(87) International publication number: WO 2013/172370

(56) References cited:
- EP-A2- 2 302 830
- CN-A- 102 202 324
- CN-A- 102 404 076
- CHINA TELECOM: "On Search Space of ePDCCH", 3GPP DRAFT; R1-120581, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563240, [retrieved on 2012-02-01]
- ALCATEL-LUCENT ET AL: "Further details of ePDCCH UE-specific search space design", 3GPP DRAFT; R1-120507 EPDCCH SEARCH SPACE DETAILS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563228, [retrieved on 2012-02-01]
- SHARP: 'Common Search space in ePDCCH' 3GPP TSG RAN WG1 MEETING #68BIS R1-121354 30 March 2012, XP050599642
- FUJITSU: 'Requirements and signaling for configuration of UESSS and CSS on ePDCCH' 3GPP TSG RAN WG1 MEETING #68BIS R1-121199 30 March 2012, XP050599496
- HUAWEI ET AL.: 'Discussion on ePDCCH Common search space' 3GPP TSG RAN WG1 MEETING #68BIS R1-120997 30 March 2012, XP050599308
- HUAWEI ET AL.: 'UE-specific search space for ePDCCH' 3GPP TSG RAN WG1 MEETING #68BIS R1-120998 30 March 2012, XP050599309
- FUJITSU: "Requirements and signalling for configuration of UESSS and CSS on ePDCCH", 3GPP DRAFT; R1-121199 REQUIREMENTS AND SIGNALLING FOR UESSS AND CSS IN E-PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599496, [retrieved on 2012-03-20]
- FUJITSU: "Motivation, Requirements and Design of ePCFICH", 3GPP DRAFT; R1-121202 MOTIVATION, REQUIREMENTS AND DESIGN OF EPCFICH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599498, [retrieved on 2012-03-20]
- SAMSUNG: "Enhanced PCFICH", 3GPP DRAFT; R1-122261 EPCFICH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600524, [retrieved on 2012-05-12]
- SHARP: "Common search space in ePDCCH", 3GPP DRAFT; R1-121354, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599642, [retrieved on 2012-03-20]

## Description

### TECHNICAL FIELD

The present invention relates to a terminal, a base station, a communication system, and a communication method.

### BACKGROUND ART

In a wireless communication system, such as Long Term Evolution (LTE) and LTE-Advanced (LTE-A) based on Third Generation Partnership (3GPP), or Wireless LAN and Worldwide Interoperability for Microwave Access (WiMAX) based on the Institute of Electrical and Electronics engineers (IEEE), a base station (a base station apparatus, a downlink transmitting apparatus, an uplink receiving apparatus, or an eNode B) and a terminal (terminal apparatus, a mobile station apparatus, a downlink receiving apparatus, an uplink transmitting apparatus, a user device, or UE) include multiple transmit/receive antennas and spatially multiplex data signals by using a Multi Input Multi Output (MIMO) technology, thereby realizing high-speed data communication. Furthermore, particularly, in LTE and LTE-A, high spectral efficiency is realized using an Orthogonal Frequency Division Multiplexing (OFDM) scheme for downlink, and peak power is suppressed using a Single Carrier-Frequency Division Multiple Access (SC-FDMA) scheme for uplink.

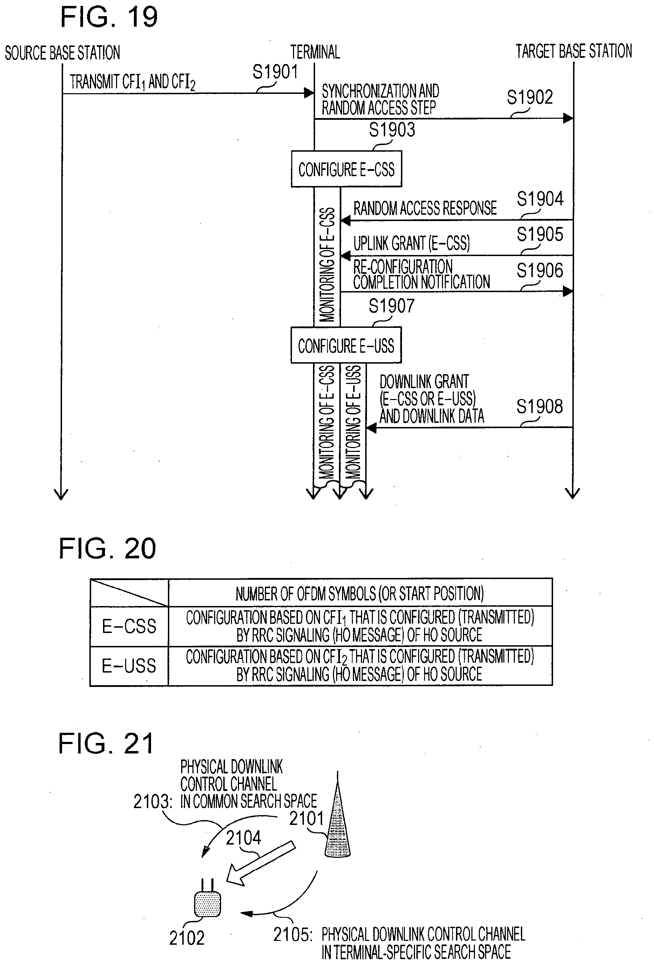

Fig. 21 is a diagram illustrating a configuration of an LTE communication system. In Fig. 21, a base station 2101 notifies a terminal 2102 of control information relating to downlink transmission data 2104 using a Physical Downlink Control CHannel (PDCCH). At this time, a PDCCH 2103 may be arranged in a common search space, and the PDCCH 2104 may be arranged in a terminal-specific search space. Both the common search space and the terminal-specific search space are defined on OFDM symbols of which the number is predetermined, from the front of a subframe (NPL 1 and NPL 2).

### CITATION LIST

NPL 1: 3rd Generation Partnership Project; Technical Specification Group Radio Access Network; Evolved Universal Terrestrial Radio Access (E-UTRA); Physical Channels and Modulation (Release 10), June 2011, 3GPP TS 36. 211 V10.2.0 (2011-06)
NPL 2: 3rd Generation Partnership Project; Technical Specification Group Radio Access Network; Evolved Universal Terrestrial Radio Access (E-UTRA); Physical layer procedures (Release 10), June 2011, 3GPP TS 36.213 V10.2.0 (2011-06)

EP 2 713 658 A1 relates to a method in the field of wireless communication technology field comprising transmitting of information from a base station to a terminal about the resource locations of common search space (CSS) and UE-specific search space (UESS) of PDCCH. Furthermore, blind estimation is implemented by the terminal according to the resource locations of CSS and UESS of the PDCCH.

EP 2 302 830 A2 relates to a ethod and apparatus for transmitting and receiving Downlink Control Information (DCI) in a single cell in order to support communication over multiple cells. The DCI is conveyed by DCI formats transmitted through Physical Downlink Control CHannels (PDCCHs) in a UE-Common Search Space (UE-CSS) and in a UE-Dedicated Search Space (UE-DSS). A distinct UE-DSS is defined in the single cell for each of the multiple cells. Each distinct UE-DSS has the same structure as a conventional UE-DSS and a location that is determined by the same parameters as the location of the conventional UE-DSS and by the respective cell identity (Cell_ID).

EP 2 779 501 A1 relates to an information sending and blind detection method and in the technical field of wireless communication technologies. According to the method, a base station determines a plurality of preset blind detection candidate sets, each blind detection candidate set containing at least one PDCCH candidate resource; and using the PDCCH Candidates in at least one blind detection candidate set of the plurality of blind detection candidate sets to send control information to a terminal. The terminal determines a plurality of preset blind detection candidate sets, and performs blind detection of control information over the PDCCH Candidates in each blind detection candidate set of the plurality of blind detection candidate sets.

CHINA TELECOM: "On Search Space of ePDCCH", 3GPP DRAFT; R1-120581, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 1 February 2012, relates to the design of a common search space and the design of adressing an ePDCCH.

ALCATEL-LUCENT ET AL: "Further details of ePDCCH UE-specific search space design", 3GPP DRAFT; Rl-120507 EPDCCH SEARCH SPACE DETAILS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 1 February 2012 relates to a design of a UE specific search space for an ePDCCH.

Documents FUJITSU: "Requirements and signalling for configuration of UESSS and CSS on ePDCCH", 3GPP DRAFT; R1-121199, RAN WG1, no. Jeju, Korea; 20 March 2012 and FUJITSU: "Motivation, Requirements and Design of ePCFICH", 3GPP DRAFT; R1-121202, RAN WG1, no. Jeju, Korea; 20 March 2012 disclose techniques for indicating an enhanced common search space (E-CSS) in the E-PDCCH region, by means of an Enhanced Physical Control Format Indicator Channel (E-PCFICH).

### DISCLOSURE OF THE INVENTION

### Problems to be Solved by the Invention

Thus, according to an aspect, the problem relates to how to increase transmission efficiency in a wireless communication system.

However, it is considered that an enhanced physical downlink control channel, as well as a physical downlink control channel, is used in order to increase the number of terminals that one base station can accommodate. The enhanced physical downlink control channel is not necessarily defined on an OFDM symbol at the front of a subframe. Accordingly, in a method in the related art, a position of a search space cannot be configured to be common to a base station and a terminal, which is a cause for reducing transmission efficiency.

This problem is solved by the subject-matter of the independent claims. Preferred embodiments are defined in the dependent claims.

The embodiments that do not fall under the scope of the claims have to be interpreted as examples useful for understanding the invention.

As an example, when the base station notifies the terminal of control information not only through a physical downlink control channel but also through an enhanced physical downlink control channel, a position of a search space can be efficiently configured in a wireless communication system in which a base station and a terminal communicate with each other.

### Effects of the Invention

According to the present invention, even when the base station notifies the terminal of control information not only through a physical downlink control channel but also through an enhanced physical downlink control channel, a position of a search space can be efficiently configured in a wireless communication system in which a base station and a terminal communicate with each other.

### BRIEF DESCRIPTION OF THE DRAWINGS

[Fig. 1] Fig. 1 is a diagram illustrating a configuration example of a communication system according to a first embodiment of the present invention.
[Fig. 2] Fig. 2 is a diagram illustrating one configuration example of a radio frame of downlink according to the embodiment.
[Fig. 3] Fig. 3 is a diagram illustrating one configuration example of the radio frame of the uplink according to the embodiment.
[Fig. 4] Fig. 4 is a schematic diagram illustrating one example of a block configuration of a base station according to the embodiment.
[Fig. 5] Fig. 5 is a schematic diagram illustrating one example of a block configuration of a terminal according to the embodiment.
[Fig. 6] Fig. 6 is a diagram illustrating a physical resource block and a virtual resource block in a PDCCH region and a PDSCH region according to the embodiment.
[Fig. 7] Fig. 7 is a diagram illustrating one example of mapping an E-PDCCH in an E-PDCCH region according to the embodiment.
[Fig. 8] Fig. 8 is a diagram illustrating another example of mapping the E-PDCCH in the E-PDCCH region according to the embodiment.
[Fig. 9] Fig. 9 is a diagram illustrating one example of a constituent element within the E-PDCCH region according to the embodiment.
[Fig. 10] Fig. 10 is a diagram illustrating another example of the constituent element within the E-PDCCH region according to the embodiment.
[Fig. 11] Fig. 11 is a diagram illustrating another example of the constituent element within the E-PDCCH region according to the embodiment.
[Fig. 12] Fig. 12 is a diagram illustrating a flow of transmission and reception of downlink data between the base station and the terminal according to the embodiment.
[Fig. 13] Fig. 13 is a diagram illustrating one example of a method of configuring the number of OFDM symbols in a common search space and a terminal-specific search space according to the embodiment.
[Fig. 14] Fig. 14 is a diagram illustrating one example of a method of configuring the number of the OFDM symbols that are punctured in the common search space and the terminal-specific search space according to the embodiment.
[Fig. 15] Fig. 15 is a diagram illustrating a flow of the transmission and reception of the downlink data between the base station and the terminal according to a second embodiment of the present invention.
[Fig. 16] Fig. 16 is a diagram illustrating one example of a method of configuring the number of OFDM symbols in a common search space and a terminal-specific search space according to the embodiment.
[Fig. 17] Fig. 17 is a diagram illustrating a flow of the transmission and reception of the downlink data between the base station and the terminal according to a third embodiment of the present invention.
[Fig. 18] Fig. 18 is a diagram illustrating one example of a method of configuring the number of OFDM symbols in a common search space and a terminal-specific search space according to the embodiment.
[Fig. 19] Fig. 19 is a diagram illustrating a flow of the transmission and reception of the downlink data between the base station and the terminal according to a fourth embodiment of the present invention.
[Fig. 20] Fig. 20 is a diagram illustrating one example of a method of configuring the number of OFDM symbols in a common search space and a terminal-specific search space according to the embodiment.
[Fig. 21] Fig. 21 is a diagram illustrating the configuration example of the communication system.

### BEST MODE FOR CARRYING OUT THE INVENTION

### (First Embodiment)

A first embodiment of the present invention is described below. A communication system according to the first embodiment includes a base station (a base station apparatus, a downlink transmitting apparatus, an uplink receiving apparatus, or an eNode B) and a terminal (terminal apparatus, a mobile station apparatus, a downlink receiving apparatus, an uplink transmitting apparatus, a user equipment, or UE).

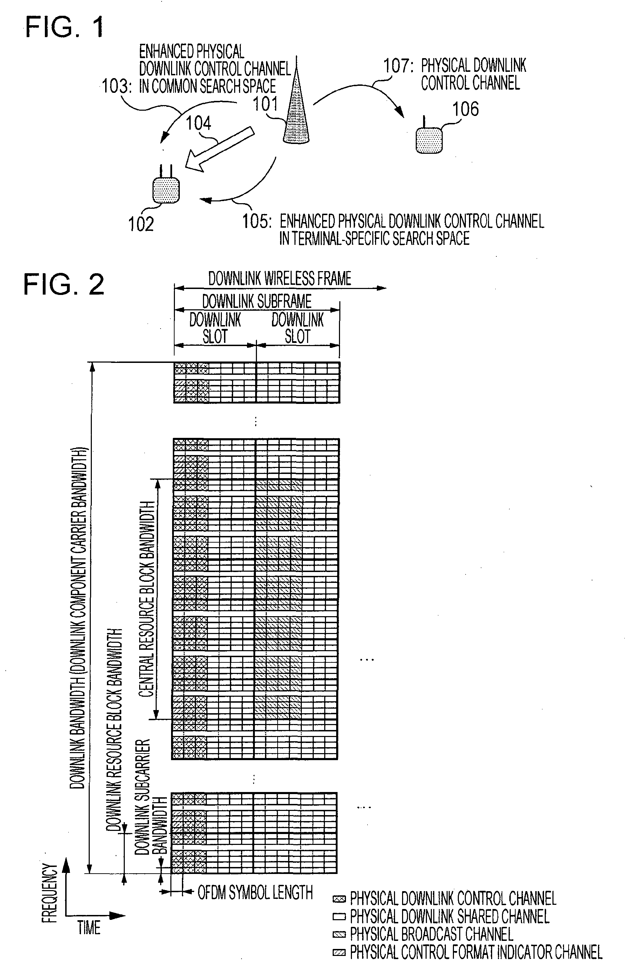

Fig. 1 is a diagram illustrating a configuration example of the communication system according to the first embodiment. In Fig. 1, a base station 101 broadcasts to a terminal 102 control information relating to downlink transmission data 104 using an Enhanced Physical Downlink Control Channel (E-PDCCH: Enhanced-PDCCH) that is an enhanced Physical Downlink Control Channel. The terminal 102 tries to detect the control information. In a case where the control information is detected, the terminal 102 extracts the downlink transmission data 104 using the detected control information. At this point, a search space that is a space from which the terminal 102 attempts to detect an E-PDCCH is categorized into a common search space that is a search space that is determined without depending on signaling specific to the terminal and a terminal-specific search space that is a search space that is determined depending on the signaling specific to the terminal. The base station 101 arranges the E-PDCCH in the common search space and/or the terminal-specific search space and thus transmits the E-PDCCH, and the terminal 102 attempts to detect an E-PDCCH 103 in the common search space and/or an E-PDCCH 104 in the terminal-specific search space. Moreover, details of each of the common search space and the terminal-specific search space are described below. On the other hand, the base station 101 can accommodate at the same time the terminal 102 that uses the E-PDCCH and a terminal 106 that uses a PDCCH. The base station 101 transmits a PDCCH 107 to the terminal 106 with the same subframe as when transmitting the E-PDCCH to the terminal 102. Moreover, the terminal 102 also may have a function of receiving the PDCCH 107.

Fig. 2 is a diagram illustrating one configuration example of a downlink radio frame according to the present embodiment. For downlink, the OFDM access is used. For downlink, the PDCCH, a Physical Downlink Shared Channel (PDSCH), a Physical Broadcast Channel (PBCH), a Physical Control Format Indicator Channel (PCFICH), and the like are allocated. A downlink radio frame comprises a downlink Resource Block (RB) pair. The downlink RB pair is a unit of allocation or the like of a downlink radio resource and is made from a frequency band (RB bandwidth) with a predetermined width and a time slot (2 slots = 1 subframe). One downlink RB pair consists of 2 downlink RB's (RB bandwidth x slot) that are consecutive in a time domain. One downlink RB consists of 12 subcarriers in a frequency domain, and consists of 7 OFDM symbols in the time domain. A domain that is specified by one subcarrier in the frequency domain and one OFDM symbol in the time domain is referred to as a resource element (RE). The physical downlink control channel is a physical channel over which downlink control information is transmitted such as a terminal apparatus identifier, scheduling information on a physical downlink shared channel, scheduling information on a physical uplink shared channel, a modulation scheme, a coding rate, or a retransmission parameter. Moreover, here, a downlink subframe is entered in one component carrier (CC), but the downlink subframe is defined for every component carrier and the downlink subframe is mostly synchronized between the CC's.

The PDCCH is allocated on a given number of the OFDM symbols which are positioned at a head portion within the subframe. The PDSCH is allocated on the OFDM symbol that is positioned behind the OFDM symbol on which the PDCCH is allocated. The PBCH is allocated to a second slot in 6 resource block pairs that are positioned in the center of a system band (CC band). Furthermore, the PBCH is arranged for every period of 10 subframes. The PCFICH is discretely allocated on the head OFDM symbol within the subframe. Any terminal can receive the PBCH and the PCFICH without terminal-dedicated (terminal-specific) signaling being performed.

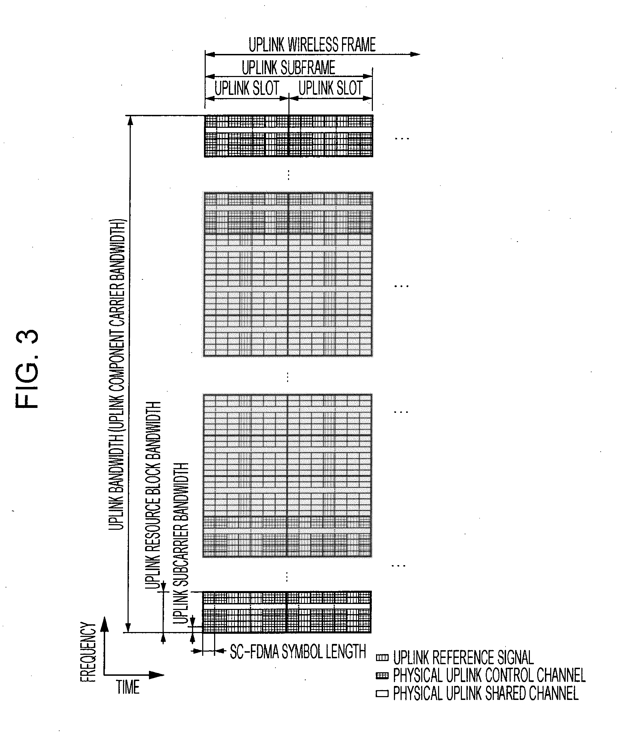

Fig. 3 is a diagram illustrating one configuration example of an uplink radio frame according to the present embodiment. For uplink, an SC-FDMA scheme is used. For uplink, a Physical Uplink Shared Channel (PUSCH) and a PUCCH, and the like are allocated. Furthermore, an uplink reference signal is allocated on one portion of the PUSCH or of the PUCCH. An uplink radio frame is configured from an uplink RB pair. The uplink RB pair is a unit of allocation or the like of an uplink radio resource and is made from the frequency band (RB bandwidth) with the predetermined width and the time slot (two slots = 1 subframe). One uplink RB pair is configured from two of the uplink RB's (RB bandwidth x slot) that are consecutive in the time domain. One uplink RB is configured from 12 subcarriers in the frequency domain, and is configured from 7 SC-FDMA symbols in the time domain. Moreover, here, an uplink subframe is entered in one CC, but the uplink subframe is defined for every CC.

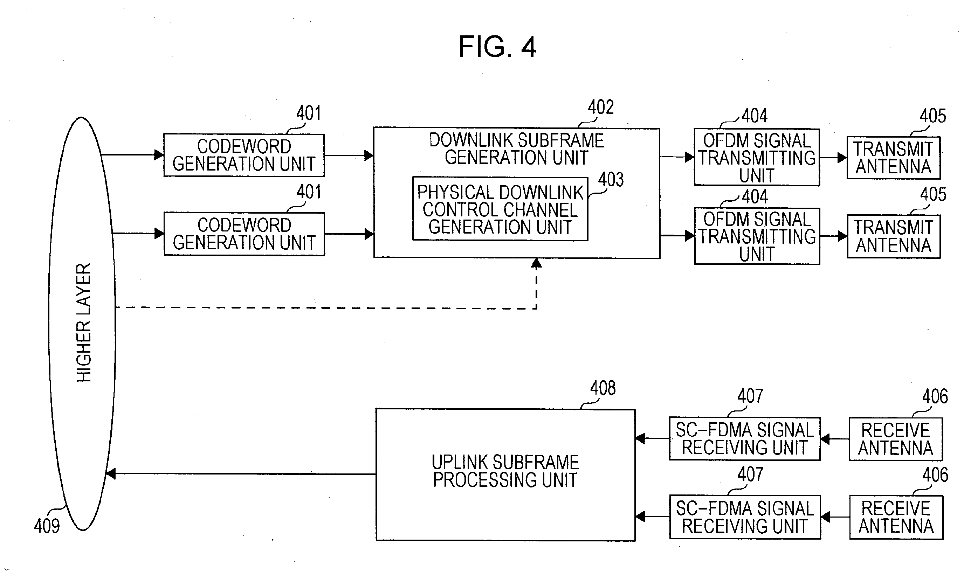

Fig. 4 is a schematic diagram illustrating one example of a block configuration of the base station 101 according to the present embodiment. The base station 101 has a codeword generation unit 401, a downlink subframe generation unit 402, an OFDM signal transmitting unit (downlink control channel transmitting unit) 404, a transmit antenna (base station transmit antenna) 405, a receive antenna (base station receive antenna) 406, an SC-FDMA signal receiving unit 407, an uplink subframe processing unit 408, and a higher layer (higher layer control information broadcasting unit) 409. The downlink subframe generation unit 402 has a physical downlink control channel generation unit 403.

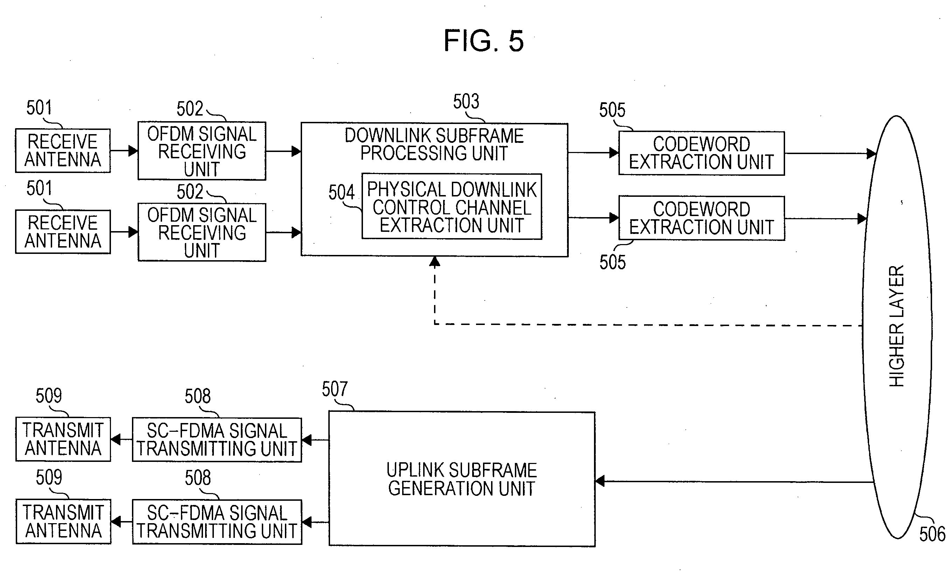

Fig. 5 is a schematic diagram illustrating one example of a block configuration of the terminal 102 according to the present embodiment. The terminal 102 has a receive antenna (terminal receive antenna) 501, an OFDM signal receiving unit (downlink receiving unit) 502, a downlink subframe processing unit 503, a codeword extraction unit (data extraction unit) 505, a higher layer (higher layer control information obtainment unit) 506, an uplink subframe generation unit 507, an SC-FDMA signal transmitting unit 508, and a transmit antenna (terminal transmit antenna) 509. The downlink subframe processing unit 503 has a physical downlink control channel extraction unit (downlink control channel detection unit) 504.

First, a flow of transmission and reception of downlink data is described referring to Figs. 4 and 5. In the base station 101, types of processing, such as error correction coding, and rate matching processing, are performed on transmission data (also referred to as a transport block) which is delivered from the higher layer 409 in the codeword generation unit 401, and a codeword is generated. If there is a case where the downlink transmission data is the transmission data that is intended for the terminal 102, there is also a case where the downlink transmission data is the transmission data, such as paging or system information, that is common to multiple terminals. A maximum of two codewords are transmitted at the same time in one subframe in one cell. In the downlink subframe generation unit 402, the downlink subframe is generated under the instruction of the higher layer 409. First, modulation processing, such as Phase Shift Keying (PSK) modulation or Quadrature Amplitude Modulation (QAM) modulation, is performed on the codeword generated in the codeword generation unit 401, and thus the codeword is converted into a series of modulation symbols. Furthermore, the series of modulation symbols is mapped onto the RE within one portion of the RB, and the downlink subframe is generated for every antenna by performing precoding processing. Moreover, the RE for downlink is defined as corresponding to each subcarrier on each OFDM symbol. At this time, a series of pieces of transmission data that are delivered from the higher layer 409 includes control information (higher layer control information) for Radio Resource Control (RRC) signaling. Furthermore, in the physical downlink control channel generation unit 403, the physical downlink control channel is generated. At this point, the control information (the downlink control information, and a downlink grant) included in the physical downlink control channel includes pieces of information, such as Modulation and Coding Scheme (MSC) indicating the modulation scheme and the like for downlink, downlink resource assignment indicating the RB that is used for data transmission, HARQ control information (a redundancy version · a HARQ process number · a new data indicator) that is used for HARQ control, and a PUCCH-Transmission Power Control (TPC) command that is used for closed loop transmission power control of the PUCCH. Furthermore, the physical downlink control channel generation unit 403 also has a function of generating physical broadcast channel PBCH or PCFICH that specifies a Control Format Indicator (CFI) and the like. Under the instruction of the higher layer 410, the downlink subframe generation unit 402 masks the physical downlink control channel using a Radio Network Temporary ID (RNTI) according to types of downlink transmission data, and maps the physical downlink control channel onto the RE within the downlink subframe. The RE onto which the physical downlink control channel is mapped is an RE that makes up the search space. The physical downlink control channel is mapped onto a RE that makes up the common search space or an RE that makes up the terminal-specific search space. The downlink subframe for every antenna port, which is generated in the downlink subframe generation unit 402, is modulated into an OFDM signal in the OFDM signal transmitting unit 404 and is transmitted through the transmit antenna 405.

In the terminal 102, the OFDM signal is received through the receive antenna 501 in the OFDM signal receiving unit 502 and OFDM demodulation processing is performed. The downlink subframe processing unit 503 first detects the PDCCH (a first downlink control channel) or the E-PDCCH (a second downlink control channel) in the physical downlink control channel extraction unit 504. More specifically, a space (a first downlink control channel range) in which the PDCCH is arranged or a space (a second downlink control channel range, that is, the potential E-PDCCH) in which the E-PDCCH can be arranged is decoded and a CRC check bit that is attached in advance is checked (blind decoding). That is, the physical downlink control channel extraction unit 504 monitors the E-PDCCH that is arranged in the common search space and/or the terminal-specific search space. Furthermore, the physical downlink control channel extraction unit 504 has a function of extracting the PBCH or the PCFICH and obtains the CFI. In a case where the CRC check bit agrees with an ID (RNTI) that is allocated in advance from the base station, the downlink subframe processing unit 503 recognizes that the PDCCH or the E-PDCCH can be detected, and extracts the PDSCH using the control information that is included in the detected PDCCH or E-PDCCH. More specifically, RE demapping processing, demodulation processing or the like is performed which corresponds to RE mapping processing or the modulation processing, in the downlink subframe generation unit 402. The PDSCH extracted from the received downlink subframe is transmitted to the codeword extraction unit 505. In the codeword extraction unit 505, the rate matching processing, error correction decoding, or the like, which corresponds to the rate matching processing or the error correction coding in the codeword generation unit 401, is performed and the transport block is extracted and is delivered to the higher layer 506. That is, in a case where the physical downlink control channel extraction unit 504 detects the PDCCH or the E-PDCCH, the codeword extraction unit 505 extracts the transmission data in the PDSCH associated with the detected PDCCH or E-PDCCH and delivers the extracted transmission data to the higher layer 506.

Next, a flow of transmission and reception of uplink transmission data is described. In the terminal 102, in the uplink subframe generation unit 507, the uplink transmission data that is delivered from the higher layer 506 is mapped onto the RB within the uplink subframe. The SC-FDMA signal transmitting unit 508 performs SC-FDMA modulation on the uplink subframe and thus generates an SC-FDMA signal and transmits the generated SC-FDMA signal through the transmit antenna 509.

In the base station 101, the SC-FDMA signal is received in the SC-FDMA signal receiving unit 407 through the receive antenna 406, and SC-FDMA demodulation processing is performed. In the uplink subframe processing unit 408, the uplink transmission data is extracted from the RB onto which the uplink transmission data is mapped, and the extracted uplink transmission data is delivered to the higher layer 409.

At this point, the CFI is described. The CFI that is indicated by the PCFICH normally indicates the number of the OFDM symbols to which the PDCCH is allocated. Furthermore, accordingly, the CFI that is indicated by the PCFICH specifies the OFDM symbol that is a starting position of the PDSCH. On the other hand, according to the present embodiment, the CFI is assumed which specifies the OFDM symbol that is a starting position of the E-PDCCH. The CFI may be a CFI that is indicated by the PCFICH, and may be a CFI that is indicated by another control information (for example, PBCH or RRC signaling, or the like). Alternatively, the CFI may be a predetermined CFI (that is, the OFDM symbol that is the starting position of the E-PDCCH is fixed). The CFI for the E-PDCCH is described in detail below. The physical downlink control channel extraction unit 504 and the physical downlink control channel generation unit 403 internally include a storage unit and have a function of retaining (storing) the CFI itself or the number of the OFDM symbols that are specified by the CFI.

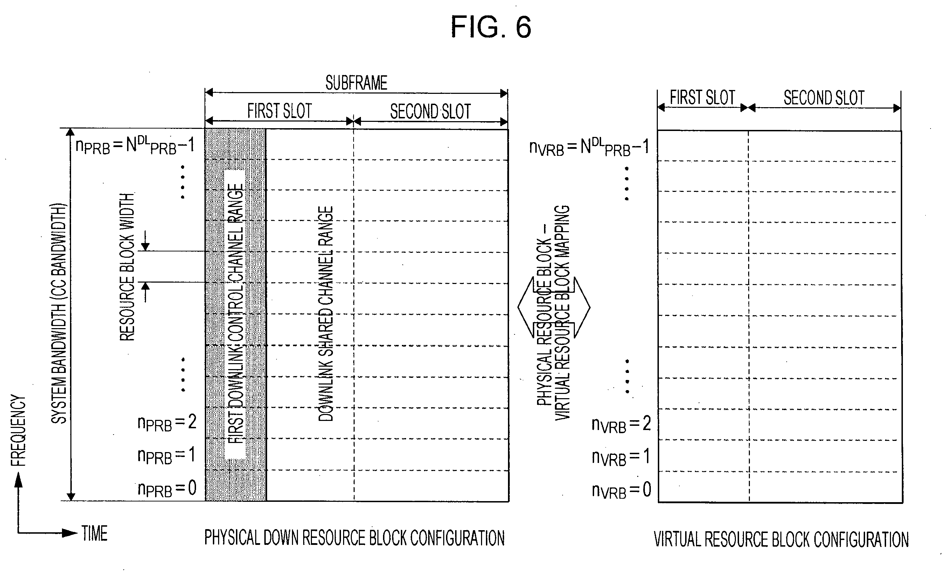

Next, the PDCCH and the E-PDCCH are described. Fig. 6 is a diagram illustrating a physical resource block PRB (physical RB) and a virtual resource block VRB (virtual RB) in a PDCCH region and a PDSCH region. The RB on the actual subframe is called a PRB. Furthermore, the RB that is a logical resource that is used in the RB allocation is called a VRB. N^{DL}_{PRB} is the number of PRB's that are arranged in a frequency direction within a downlink CC. A number n_{PRB} is assigned to the PRB (or a PRB pair), and n_{PRB} is 0, 1, 2, and so forth up to N^{DL}_{PRB} - 1 in ascending order of frequency. The number of the VRB's that are arranged in the frequency direction within the downlink CC is equal to N^{DL}_{PRB}. A number n_{VRB} is assigned to the VRB (or a VRB pair), and n_{VRB} is 0, 1, 2, and so forth up to N^{DL}_{PRB} - 1 in ascending order of frequency. Each PRB and each VRB are mapped explicitly or implicitly/suggestively. Moreover, the number here can be also expressed using an index.

The PDCCH is configured from multiple Control Channel Elements (CCE) within the PDCCH region. The CCE is configured from multiple downlink resource elements RE (each of which is a resource defined by one OFDM symbol and one subcarrier). A number n_{CCE} for identifying the CCE is assigned to the CCE within the PDCCH region. The assignment to the CCE is performed based on a predetermined rule. The PDCCH is configured from an aggregation (CCE aggregation) that is made from the multiple CCE's. The number of the CCE's that make up the aggregation is referred to as a "CCE aggregation level". The CCE aggregation level that makes up the PDCCH is determined in the base station 101, according to the coding rate that is set for the PDCCH and the number of bits of Downlink Control Information (DCI; downlink control information) (control information transmitted by the PDCCH or the E-PDCCH) that is included in the PDCCH. Moreover, a combination of the CCE aggregation levels that are potentially used for the terminal is predetermined. Furthermore, the aggregation that is made from the n CCE's is called "CCE aggregation level n".

One REG (RE group) comprises 4 RE's that are adjacent in the frequency domain. Moreover, one CCE comprises 9 different REG's that are distributed in the frequency domain and the time domain within the PDCCH region. Specifically, interleaving is performed to all the REG's to which a number is assigned, in units of REG's, on the entire downlink CC by using a block interleaver, and one CCE comprises 9 REG's of which the numbers are consecutive after the interleaving.

A search space (SS) that is a space (a search space or a retrieval space) from which the PDCCH is retrieved is configured in the terminal. The SS comprises the multiple CCE's. Numbers are assigned to the CCE's, and the SS consists of the multiple CCE's of which the numbers are consecutive. The number of the CCE's that make up a certain SS is predetermined. The SS of each CCE aggregation level consists of a set of multiple candidates for the PDCCH. The SS is categorized into a cell-specific common search space CSS (cell-specific SS, common SS) in which the smallest CCE number, among the CCE's that make up the SS, is common in the cell, and a terminal-specific search space USS (UE-specific SS) in which the smallest CCE number is specific to the terminal. The PDCCH to (in) which the control information, such as the system information or the information relating to the paging, that the multiple terminals 102 read, is allocated (included), or the PDCCH to (in) which the downlink/uplink grant indicating an instruction for fallback to a low-level transmission scheme or random access is allocated (included) can be mapped in the CSS. On the other hand, these PDCCH's cannot be mapped in the USS.

The base station 101 transmits the PDCCH using one or more CCE's within the SS that are configured in the terminal 102. The terminal 102 performs processing for detecting the PDCCH that is intended for the terminal 102 itself, without performing decoding of a receive signal using one or more CCE's within the SS. As described above, such processing is referred to as blind decoding. The terminal 102 configures the SS that varies from one CCE aggregation level to another. Thereafter, the terminal 102 performs the blind decoding using a given combination of the CCE's within the SS that varies from one CCE aggregation level to another. In other words, the terminal 102 performs the blind decoding on the candidate for each PDCCH within the SS that varies from one CCE aggregation level to another. The sequence of processing is called monitoring of the PDCCH.

The base station arranges in the CSS the PDCCH that gives an instruction for the paging or system information, a random access response, or the like (the PDCCH that assigns common transmission data to the multiple terminals). Furthermore, in the CSS, the terminal performs the monitoring (the blind decoding and checking of the CRC check bit) of the PDCCH that uses a P-RNTI, an SI-RNTI, a RA-RNTI, or the like.

Next, the E-PDCCH is described. The E-PDCCH is basically mapped in the OFDM symbol other than the PDCCH (but, the E-PDCCH may be mapped in a partial overlapping manner). The E-PDCCH and the PDSCH are frequency-multiplexed. Furthermore, the resource block in which the E-PDCCH is potentially mapped is configured for each terminal.

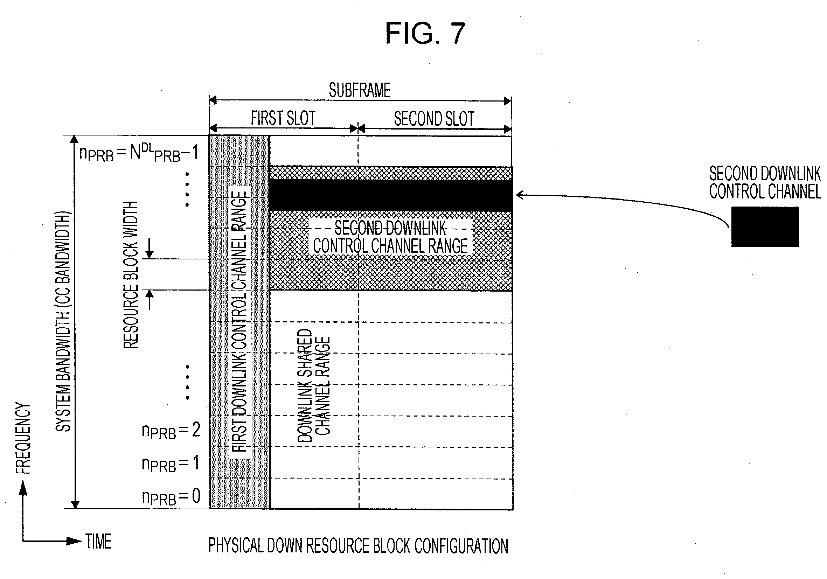

Fig. 7 is a diagram illustrating one example of mapping the E-PDCCH in the E-PDCCH region. According to the local mapping scheme, one E-PDCCH is mapped on the RE on a local band. In this manner, one E-PDCCH logical resource element is mapped onto one PRB, and thus the E-PDCCH can be locally arranged along a frequency axis (a resource allocation type 1). E-PDCCH transmission that uses the mapping which enables such local E-PDCCH transmission is referred to as localized E-PDCCH transmission (first E-PDCCH transmission). With the localized E-PDCCH transmission, the E-PDCCH can be transmitted using a good-quality frequency channel in a frequency selectivity fading environment. Accordingly, in a case where frequency selectivity of channels is understood, a great gain can be obtained.

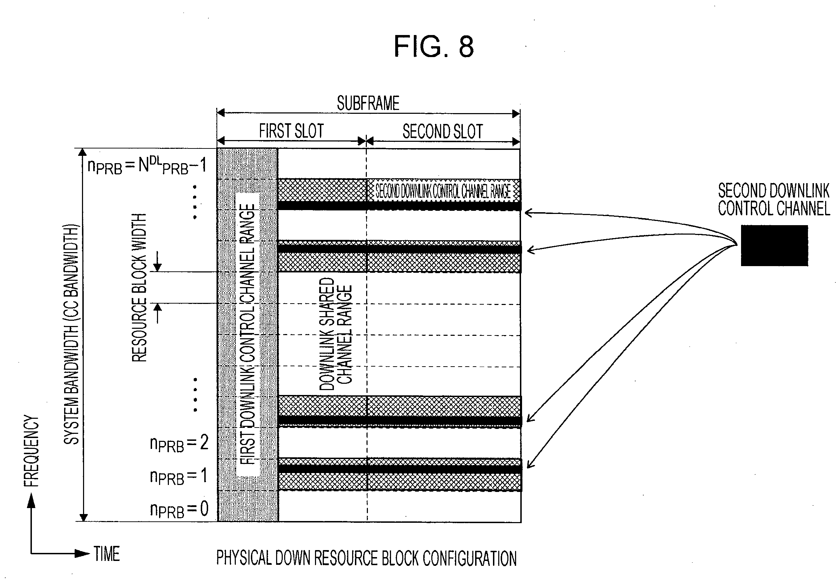

Next, Fig. 8 is a diagram illustrating another example of mapping the E-PDCCH in the E-PDCCH region. With a distributed mapping scheme, one E-PDCCH is mapped onto the RE on the non-contiguous band along the frequency axis. One E-PDCCH logical resource element is mapped onto the multiple PRB's and thus the E-PDCCH can be arranged, in a distributed manner, along the frequency axis (a resource allocation type 2). E-PDCCH transmission that uses the mapping that enables such distributed E-PDCCH transmission is referred to as distributed E-PDCCH transmission (second E-PDCCH transmission). With the distributed E-PDCCH transmission, a great effect of frequency diversity can be obtained in the frequency selectivity fading environment. Accordingly, the gain of not depending on the frequency selectivity of the channel can be obtained.

In this manner, some of (or all of) the PRB pairs are configured as the E-PDCCH region (region in which the E-PDCCH can be potentially arranged). Moreover, with the mapping scheme that is specified explicitly or implicitly/suggestively, the E-PDCCH is arranged in some of (or all of) the PRB pairs in the PDSCH region.

As described above, a great difference between the PDCCH and the E-PDCCH is that while on the OFDM symbol at the head portion of the subframe, the PDCCH is arranged in a distributed manner along the frequency axis over the entire system band, the E-PDCCH is used up to the OFDM symbol at the rear of the subframe along the time axis, but is mapped onto some bands (PRB) along the frequency axis.

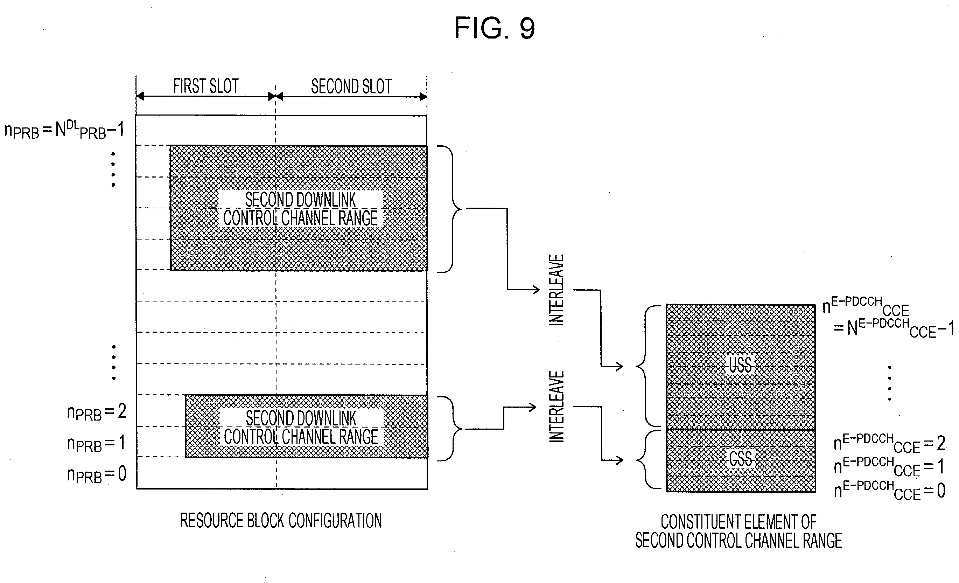

Fig. 9 is a diagram illustrating one example of a constituent element within the E-PDCCH region. Among the PRB pairs of which the number is N^{DL}_{PRB}, the PRB pairs of which the number is ^{NE-PDCCH}_{PRB} and which are configured to be in the E-PDCCH region are extracted, and the RE's within the region from which the PRB pairs are extracted are interleaved and thus are divided among the CCE's that are constituent elements of the E-PDCCH. At this point, in the same manner as with the PDCCH, the CSS (particularly, the CSS for the E-PDCCH is also referred to as an E-CSS) and the USS (particularly, the USS for the E-PDCCH is also referred to as an E-USS) are defined for the E-PDCCH. Preferably, as illustrated in Fig. 9, the interleaving should be individually performed for the CSS and the USS. Moreover, for the interleaving, it is preferred that a method that is used in a case of using the local mapping scheme be different from a method that is used in a case of using the distributed mapping scheme. For example, in the case of using the local mapping scheme, an interleaving method is used in which the RE's that make up one CCE are concentrated within a local band. On the other hand, in the case of using the distributed mapping scheme, the RE's that make up one CCE are distributed within the E-PDCCH region.

Moreover, here, the E-CSS is described on the assumption that the E-CSS is the CSS, but is not limited to this. Also in a case where the E-CCS is the USS that is configured with the terminal-specific signaling, in a case where the base station 101 configures the common SS as the E-CSS for the multiple terminals, the E-CSS can be used as substantially the CSS. In this case, because both are one portion of the USS, instead of being called the E-CSS and the E-USS, both may be called a primary SS and a secondary SS, respectively. Furthermore, in this case, it is preferable that the terminal 102 further monitor the PDCCH with the normal CSS for the purpose of the fallback. In a case where a state of a channel between the base station 101 and the terminal 102 is not understood, or during a period of time when the RRC configuration is reconfigured, the base station 101 uses the PDCCH in the normal CSS.

A number n^{E-PDCCH}_{CCE} is assigned to the E-PDCCH constituent element. For example, n^{E-PDCCH}_{CCE} is 0, 1, 2, and so forth up to N^{E-PDCCH}_{CCE} -1, in ascending order of frequency. That is, in the frequency domain, a set of PRB's of which the number is N^{E-PDCCH}_{PRB} is configured by high-level layer signaling (for example, the signaling by each terminal or the common signaling within the cell) for the potential E-PDCCH transmission, and the E-PDCCH constituent elements of which the number is N^{E-PDCCH}_{CCE} are available. In this manner, when n^{E-PDCCH}_{CCE} is configured independently of n_{CCE}, one portion of a value of n^{E-PDCCH}_{CCE} overlaps a value that can be used as n_{CCE}. Alternatively, an initial (minimum) value of N^{E-PDCCH}_{CCE} is configured to N_{CCE} or a value greater than N_{CCE}. Accordingly, one portion of the value of n^{E-PDCCH}_{CCE} cannot overlap the value that can be used as n_{CCE}.

In the same manner as with the PDCCH, the E-PDCCH is configured from a set that is made from a given number (an aggregation level) of the E-PDCCH logical resource elements. For example, there are 4 types of aggregation levels ranging from aggregation level 1 to aggregation level 8, and one E-PDCCH is configured from 1 to 8 E-PDCCH logical resource elements.

At this point, when attention is paid to the length along a time axis, of the E-PDCCH region on a physical frame, in the E-PDCCH region corresponding to the CSS and the E-PDCCH region corresponding to the USS, the length (the number of the OFDM symbols) along the time axis is configured independently (can be configured to different values). More specifically, a starting position (for example, the third OFDM symbol) of the OFDM symbol, in which the E-PDCCH channel corresponding to the CSS is defined, and a starting position (for example, the second OFDM symbol) of the OFDM symbol, in which the E-PDCCH region corresponding to the USS is defined are configured independently. These can be configured using the CFI. A CFI₁ that is a first CFI indicates the number of the OFDM symbols onto which the E-CSS is mapped, and a CFI₂ that is a second CFI indicates the number of the OFDM symbols onto which the E-CSS is mapped.

Alternatively, a mapping rule is that the mapping always begins with the leading OFDM symbol, and in the E-CSS and the E-USS, the number of the OFDM symbols that is overwritten can be configured independently. For example, for the E-PDCCH region corresponding to the CSS, the leading symbol to the second OFDM symbol are overwritten, and for the E-PDCCH channel corresponding to the USS, the leading symbol is overwritten. The CFI also can be used in configuring these. Moreover, as a channel or a signal with which to overwrite the E-PDCCH, a control channel channel, such as the PDCCH, the PCFICH, a Physical Hyblid Automatic Repeat Request (HARQ) Indicator Channel (PHICH), or the like may be possible, and a reference signal, such as a Common Reference Signal (CRS), may be possible. Alternatively, a null signal (signal of which amplitude is zero) may be possible. The overwriting of the E-PDCCH with the channels or the signals by the base station 101 is referred to as puncturing of the E-PDCCH (of the RE). In a case where the puncturing is performed, the terminal 102 may perform the demodulation processing after performing processing that replaces (de-puncturing) a receive symbol of the corresponding RE with the null signal, and may perform the demodulation on the assumption that the receive signal of the overwritten RE is the E-PDCCH.

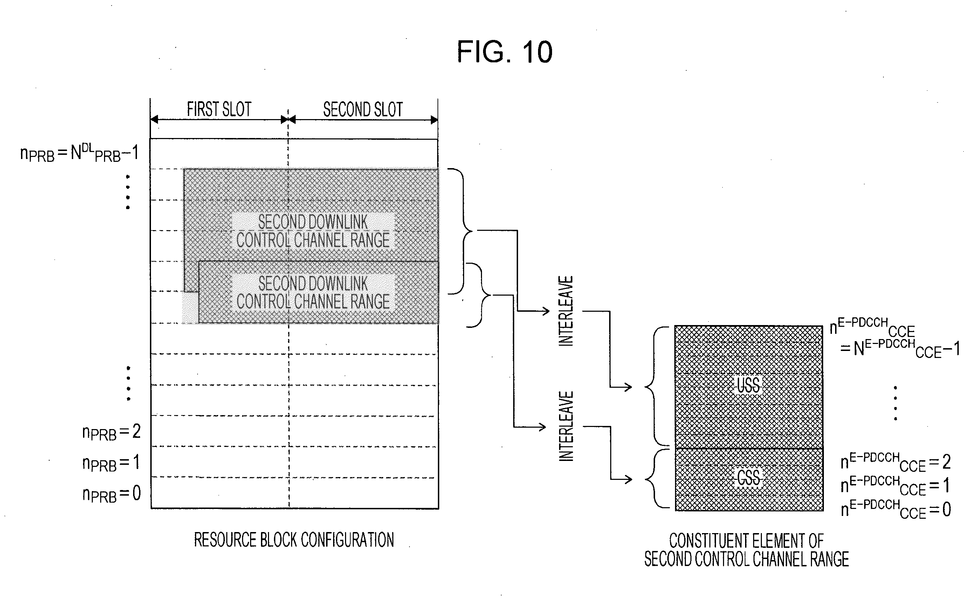

Fig. 10 is a diagram illustrating another example of the constituent element within the E-PDCCH region. In the example Fig. 9, the CSS and the USS are defined on different PRB's, respectively, but as illustrated in Fig. 10, the CSS and the USS can share one portion of the space or the entire space on the physical frame.

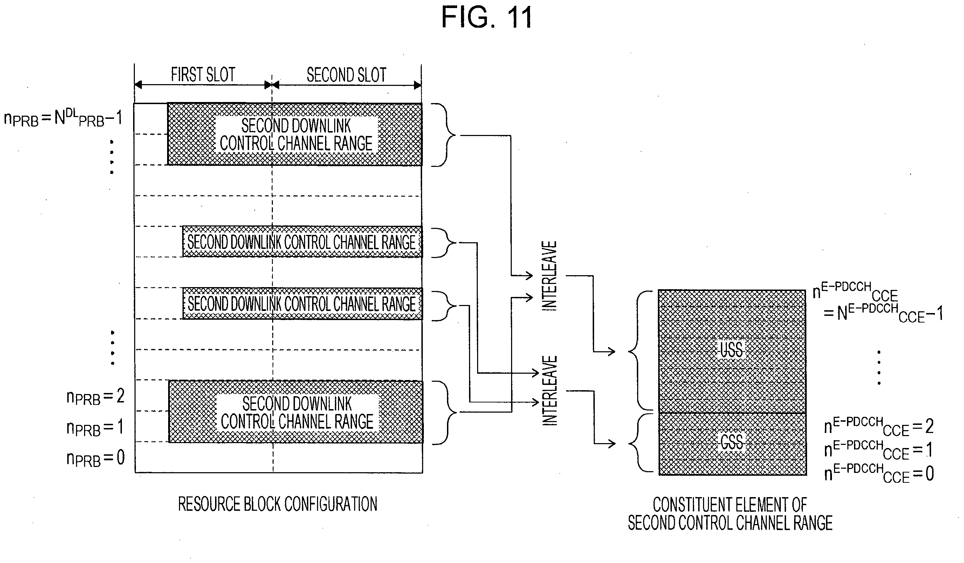

Fig. 11 is a diagram illustrating another example of the constituent element within the E-PDCCH region. In the example in Fig. 9, the CSS and the USS are defined on the PRB's that are consecutive on the physical frame, respectively, but as illustrated in Fig. 11, may be defined on the discrete PRB.

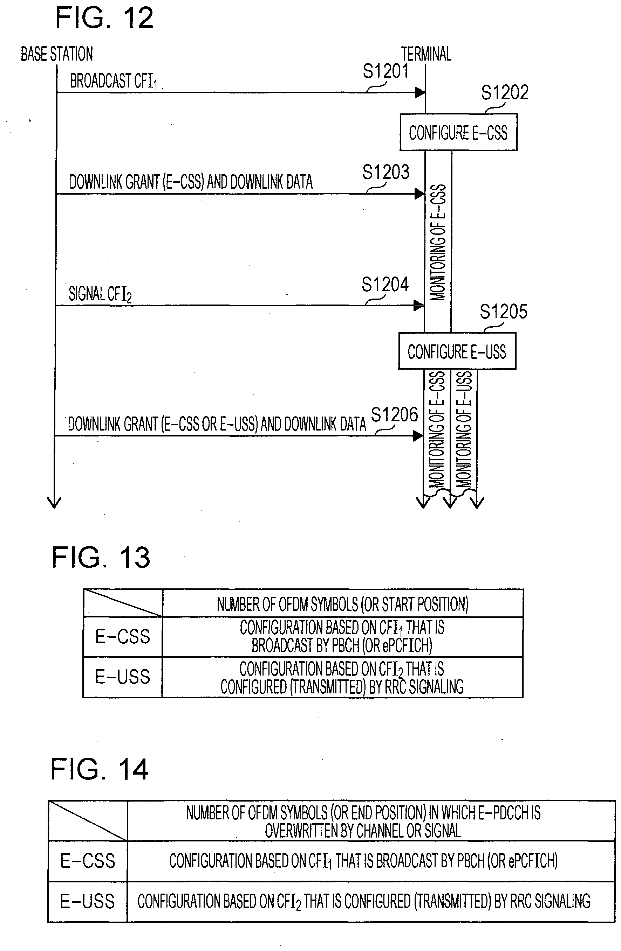

Fig. 12 is a diagram illustrating a flow of the transmission and reception of the downlink data between the base station 101 and the terminal 102. The base station 101 broadcasts the CFI₁ (Step S1201). The terminal 102 receives a signal that is broadcast, and extracts the CFI₁. The E-CSS is configured based on the number of the OFDM symbols that are specified by the extracted CFI₁ (Step S1202). When the E-CSS is configured, in the E-CSS that is configured, the terminal 102 monitors the E-PDCCH (a paging instruction, an SI instruction, a RA response instruction, and the like) that indicates the transmission data that is broadcast (the paging or system information, the random access, or the like), the E-PDCCH (a normal DL grant) that indicates the normal transmission data that is intended for the terminal 102, the E-PDCCH (a UL grant) that gives an instruction for the data transmission from the terminal 102, and the like. In a case where there is a need for transmitting the transmission data that is broadcast (the paging or system information or the random access, or the like), transmitting the normal transmission data that is intended for the terminal 102 or data from the terminal 102, or the like, in the E-CSS, the base station 101 transmits the E-PDCCH (Step S1203). Furthermore, in a case where the E-PDCCH is the downlink grant, the transmission data for downlink is transmitted with the same subframe.

Next, the base station 101 signals the CFI₂ to the terminal 102 (Step S1204). Preferably, individual signaling, such as dedicated RRC signaling, for the destination to each terminal 102 should be used. Moreover, here, a case is illustrated where when the terminal 102 monitors the E-CSS, the CFI₂ is signaled, but the signaling of the CFI₂ is not limited to this case. For example, instead of the E-PDCCH, even though only the PDCCH is monitored, the CFI₂ can be signaled. The terminal 102 configures the E-USS based on the number of the OFDM symbols that are specified by the CFI₂ that is signaled (Step S1205). When the U-CSS is configured, in the U-CSS that is configured, the terminal 102 monitors the E-PDCCH (the normal DL grant) that indicates the normal transmission data that is intended for the terminal 102, the E-PDCCH (the UL grant) that gives an instruction for the data transmission from the terminal 102, and the like. In the case where there is a need for transmitting the normal transmission data that is intended for the terminal 102 or the data from the terminal 102, or the like, in the E-CSS or the E-USS, the base station 101 transmits the E-PDCCH (Step S1206). Furthermore, in the case where the E-PDCCH is the downlink grant, the transmission data for downlink is transmitted with the same subframe. Moreover, here, a case is described where the E-CSS and the E-USS are monitored at the same time, but there is no limitation to this. For example, the base station 101 may signal to the terminal 102 to configure and cancel the monitoring of the E-CSS and/or the monitoring of the U-CSS, and in response to the signaling, the terminal 102 may start to monitor the E-CSS and/or the E-USS or stop monitoring the E-CSS and/or the E-USS. In this case, the E-CSS and the E-USS can be configured not to be monitored at the same time.

Fig. 13 is a diagram illustrating one example of a method of configuring the number of the OFDM symbols in the common search space and the terminal-specific search space. The base station 101 broadcasts information indicating the CFI₁ that specifies the number (or the starting position) of the OFDM symbols in the E-CSS, over the PBCH or an enhanced PCFICH (ePCFICH). The terminal 102 specifies the number (or the starting position) of the OFDM symbols in the E-CSS from the CFI₁ that is indicated with a signal which is broadcast over the PBCH or the ePCFICH. At this point, the ePCFICH is a physical channel for broadcasting the same CFI as the PCFICH. However, the ePCFICH is different from the PCFICH, and is a physical channel that is mapped within a given limited band. For example, as with the PBCH, the ePCFICH may be mapped onto the central 6 PRB's, and may be mapped onto given different PRB's. On the other hand, the base station 101 transmits (configures) information indicating the CFI₂ that specifies the number (or the starting position) of the OFDM symbols in the E-USS, with dedicated RRC signaling. The terminal 102 specifies the number (or the starting position) of the OFDM symbols in the E-USS, from the CFI₂ that is transmitted (configured).

Alternatively, the puncturing may be changed in the E-CSS and the E-USS. Fig. 14 is a diagram illustrating one example of a method of configuring the number of the OFDM symbols that are punctured in the common search space and the terminal-specific search space. The mapping by the base station 101 begins with the leading OFDM symbol in both of the E-CSS and the E-USS. The base station 101 broadcasts the information indicating the CFI₁ that specifies the number (or an end position) of the OFDM symbols that are punctured in the E-CSS, over the PBCH or the enhanced PCFICH (ePCFICH). The terminal 102 specifies the number (or the end position) of the OFDM symbols that are punctured in the E-CSS, from the CFI₁ that is indicated with the signal that is broadcast over the PBCH or the ePCFICH. On the other hand, the base station 101 transmits (configures) information indicating the CFI₂ that specifies the number (or the end position) of the OFDM symbols that are punctured in the E-USS, with the dedicated RRC signaling. The terminal 102 specifies the number (or the end position) of the OFDM symbols that are punctured in the E-USS, from the CFI₂ that is transmitted (configured).

In this manner, in the E-CSS and the E-USS, the base station 101 individually configures the number of the OFDM symbols to which the E-PDCCH is substantially mapped (or is not substantially mapped). Furthermore, the base station 101 broadcasts the information that specifies the number of the OFDM symbols to which the E-PDCCH is substantially mapped (or is not substantially mapped) in the E-CSS, and notifies the terminal 102 of the information that specifies the number of the OFDM symbols to which the E-PDCCH is substantially mapped (or is not substantially mapped) in the E-USS, with the dedicated RRC signaling. The terminal 102 configures the E-CSS, based on the information that specifies the number of the OFDM symbols to which the E-PDCCH is substantially mapped (or is not substantially mapped) in the E-CSS, and monitors the E-PDCCH in the E-CSS. Furthermore, the terminal 102 configures the E-USS, based on the information that specifies the number of the OFDM symbols to which the E-PDCCH is substantially mapped (or is not substantially mapped) in the E-USS, and monitors the E-PDCCH in the E-USS.

Accordingly, a position of the search space can be configured to be common to the base station 101 and the terminal 102. Furthermore, because the E-CSS and the E-USS can be individually configured, it is possible to perform the efficient transmission and reception of the E-PDCCH. Particularly, in a case where the base station 101 performs communication with the terminal 102 and the terminal 106 using the PDCCH at the same time, because the PDCCH region does not overlap the E-CSS and the E-USS, the E-PDCCH and the PDCCH do not interfere with each other. Furthermore, in the terminal 102, even though the PCFICH's that are widely distributed within the system band are not obtained, because the E-CSS that does not overlap the PDCCH region can be used, a reception band can be narrowly configured compared to the terminal that obtains the PCFICH. Moreover, even though dedicated signaling to the base station 101 is not performed, because the terminal 102 can use the E-CSS that does not overlap the PDCCH region, the transmission and reception of the E-PDCCH is possible in a case where a connection is not established like in a case of initial access. Furthermore, by broadcasting the information specifying the number of the OFDM symbols for the E-CSS in which the DL grant as to the paging or system information is arranged, common, efficient configuration can be performed on the multiple terminals. At the same time, the terminal 102 can configure the E-CSS to be static on the safe OFDM symbol in such a manner that the E-CSS does not overlap the PDCCH region, and the configuration of the E-USS can be adaptively changed according to the PDCCH region. Accordingly, efficient use of the control channel can be performed.

### (Second Embodiment)

The configuration is described above in which according to the first embodiment, the CFI₁ is broadcast from the base station to the terminal and the CFI₂ is transmitted. In contrast, a configuration is described in which according to a second embodiment, the CFI₁ is fixed, and the terminal is notified of the CFI₂ from the base station. The second embodiment of the present invention is described below. Moreover, the base station apparatus and the terminal apparatus according to the present embodiment can be realized with the same configuration as the configuration example of the base station 101 and the terminal 102 that are illustrated in Figs. 4 and 5. Furthermore, the base station apparatus and the terminal apparatus according to the present embodiment can be realized with the same configuration as the configuration examples of the frame and the channel that are illustrated in Figs. 2, 3 and 6 to 11. Accordingly, detailed descriptions of the repeated portions are not repeated.

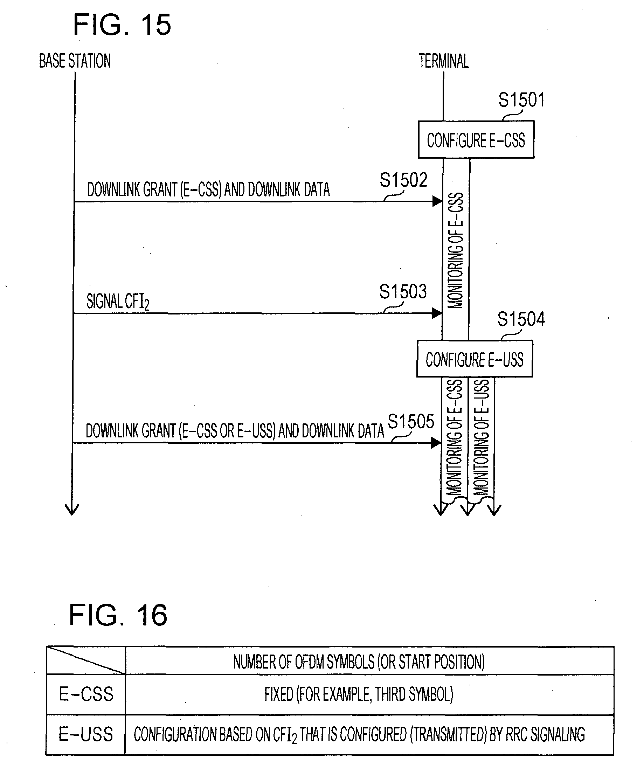

Fig. 15 is a diagram illustrating a flow of the transmission and reception of the downlink data between the base station 101 and the terminal 102. The CFI₁ is a predetermined parameter, and is pre-configured as a parameter that is common to the base station 101 and the terminal 102. The terminal 102 configures the E-CSS based on the number of the OFDM symbols that are specified by the predetermined CFI₁ (Step S1501). When the E-CSS is configured, in the E-CSS that is configured, the terminal 102 monitors the E-PDCCH (the paging instruction, the SI instruction, the RA response instruction, and the like) that indicates the transmission data (the paging or system information, the random access response, or the like) that is broadcast, the E-PDCCH (the normal DL grant) that indicates the normal transmission data that is intended for the terminal 102, the E-PDCCH (the UL grant) that gives the instruction for the data transmission from the terminal 102, and the like. In a case where there is a need for transmitting the transmission data that is broadcast (the paging or system information or the random access response, or the like), transmitting the normal transmission data that is intended for the terminal 102 or the data from the terminal 102, or the like, in the E-CSS, the base station 101 transmits the E-PDCCH (Step S1502). Furthermore, in the case where the E-PDCCH is the downlink grant, the transmission data for downlink is transmitted with the same subframe.

Next, the base station 101 signals the CFI₂ to the terminal 102 (Step S1503). Preferably, individual signaling, such as dedicated RRC signaling, for the destination to each terminal 102 should be used. Moreover, here, a case is illustrated where when the terminal 102 monitors the E-CSS, the CFI₂ is signaled, but the signaling of the CFI₂ is not limited to this case. For example, instead of the E-PDCCH, even though only the PDCCH is monitored, the CFI₂ can be signaled. The terminal 102 configures the E-USS based on the number of the symbols that are specified by the CFI₂ that is signaled (Step S1504). When the U-CSS is configured, in the U-CSS that is configured, the terminal 102 monitors the E-PDCCH (the normal DL grant) that indicates the normal transmission data that is intended for the terminal 102, the E-PDCCH (the UL grant) that gives an instruction for the data transmission from the terminal 102, and the like. In the case where there is a need for transmitting the normal transmission data that is intended for the terminal 102 or the data from the terminal 102, or the like, in the E-CSS or the E-USS, the base station 101 transmits the E-PDCCH (Step S1505). Furthermore, in the case where the E-PDCCH is the downlink grant, the transmission data for downlink is transmitted with the same subframe.

Fig. 16 is a diagram illustrating one example of a method of configuring the number of the OFDM symbols in the common search space and the terminal-specific search space. The information indicating the CFI₁ that specifies the number (or the starting position) of the OFDM symbols in the E-CSS is a fixed parameter, and is configured to be common to the base station 101 and the terminal 102. The base station 101 arranges the E-PDCCH in the E-CSS, based on the CFI₁, and the terminal 102 monitors the E-PDCCH in the E-CSS, based on the CFI₁. On the other hand, the base station 101 transmits (configures) information indicating the CFI₂ that specifies the number (or the starting position) of the OFDM symbols in the E-USS, with dedicated RRC signaling. The terminal 102 transmits (configures) the number (or the starting position) of the OFDM symbols in the E-USS, from the CFI₂ that is transmitted (configured).

Moreover, an example in Fig. 16 illustrates a case where the number of the OFDM symbols for the E-CSS and the E-USS is configured, but the number of the OFDM symbols that are punctured may be configured in the E-CSS and the E-USS in the same manner as with the example according to the first embodiment in Fig. 14. Furthermore, Fig. 16 illustrates a case where the starting position of the E-CSS is fixed to the third symbol, but the starting position is not limited to the third symbol. For example, in the E-CSS, the mapping can be made to begin with the leading symbol, and the mapping can be made not to be performed (that is, the starting position is fixed to the first symbol).

In this manner, in the E-CSS and the E-USS, the base station 101 individually configures the number of the OFDM symbols to which the E-PDCCH is substantially mapped (or is not substantially mapped). Furthermore, the number of the OFDM symbols to which the E-PDCCH is substantially mapped (or is not substantially mapped) in the E-CSS is configured to be fixed, and the base station 101 notifies the terminal 102 of the information that specifies the number (variable) of the OFDM symbols to which the E-PDCCH is substantially mapped (or is not substantially mapped) in the E-USS, with the dedicated RRC signaling. Based on the fixed number of the OFDM symbols to which the E-PDCCH is substantially mapped (is not substantially mapped) in the E-CSS, the terminal 102 configures the E-CSS, and monitors the E-PDCCH in the E-CSS. Furthermore, the terminal 102 configures the E-USS, based on the information that specifies the number of the OFDM symbols to which the E-PDCCH is substantially mapped (or is not substantially mapped) in the E-USS, and monitors the E-PDCCH in the E-USS.

Accordingly, a position of the search space can be configured to be common to the base station 101 and the terminal 102. Furthermore, because the E-CSS and the E-USS can be individually configured, it is possible to perform the efficient transmission and reception of the E-PDCCH. Particularly, in a case where the base station 101 performs at the same time the communication with the terminal 102 and the terminal 106 that uses the PDCCH, the overlapping of the PDCCH region by the E-CSS and E-USS can be controlled. Even though the PCFICH's that are widely distributed within the system band are not obtained, because the E-CSS that does not overlap the PDCCH region can be used, the terminal 102 can configure a reception band to be narrow, compared to the terminal that obtains the PCFICH. Moreover, even though dedicated signaling with the base station 101 is not performed, because the terminal 102 can use the E-CSS that does not overlap the PDCCH region, the transmission and reception of the E-PDCCH is possible in a case where a connection is not established like in a case of initial access. Furthermore, by broadcasting the information specifying the number of the OFDM symbols for the E-CSS in which the DL grant as to the paging or system information is arranged, common, efficient configuration can be performed on the multiple terminals. At the same time, the terminal 102 can configure the E-CSS to be static on the safe OFDM symbol in such a manner that the E-CSS does not overlap the PDCCH region, and the configuration of the E-USS can be adaptively changed according to the PDCCH region. Accordingly, the efficient use of the control channel can be performed.

In a case where the E-CSS space is fixed in such a manner that the E-CSS space does not overlap the PDCCH, the E-CSS and the PDCCH can interfere with each other. Furthermore, in a case where the E-CSS space is fixed in such a manner that the overlapping of the PDCCH is allowed (for example, the mapping begins with the leading symbol and the puncturing is not performed), the common mapping can be performed in the terminal in which the PDCCH region may be known and the terminal in which the PDCCH region may not be known. Accordingly, the E-PDCCH can be shared in the E-CSS in the terminal in which the PDCCH region may be known and the terminal in which the PDCCH region may not be known. On the other hand, regardless of whether or not the PDCCH region may be known in the terminal, for the E-USS to which only the terminal-specific E-PDCCH is allocated, the number of the OFDM symbols can be configured in a manner that is specific to the terminal, interference with the PDCCH does not occur and even in a case where the PDCCH region is small, the efficient use of a resource can be performed by enlarging the E-PDCCH region.

### (Third Embodiment)

The configuration is described above in which according to the first embodiment, the CFI₁ is broadcast from the base station to the terminal and the CFI₂ is transmitted. In contrast, a configuration is described in which according to a third embodiment, the CFI₁ is transmitted from the base station to the terminal (or the CFI₁ is fixed), and the CFI₂ is broadcast from the base station to the terminal over a different channel than the CFI₁. The third embodiment of the present invention is described below. Moreover, the base station apparatus and the terminal apparatus according to the present embodiment can be realized with the same configuration as the configuration example of the base station 101 and the terminal 102 that are illustrated in Figs. 4 and 5. Furthermore, the base station apparatus and the terminal apparatus according to the present embodiment can be realized with the same configuration as the configuration examples of the frame and the channel that are illustrated in Figs. 2, 3 and 6 to 11. Accordingly, detailed descriptions of the duplicated portions are not repeated.

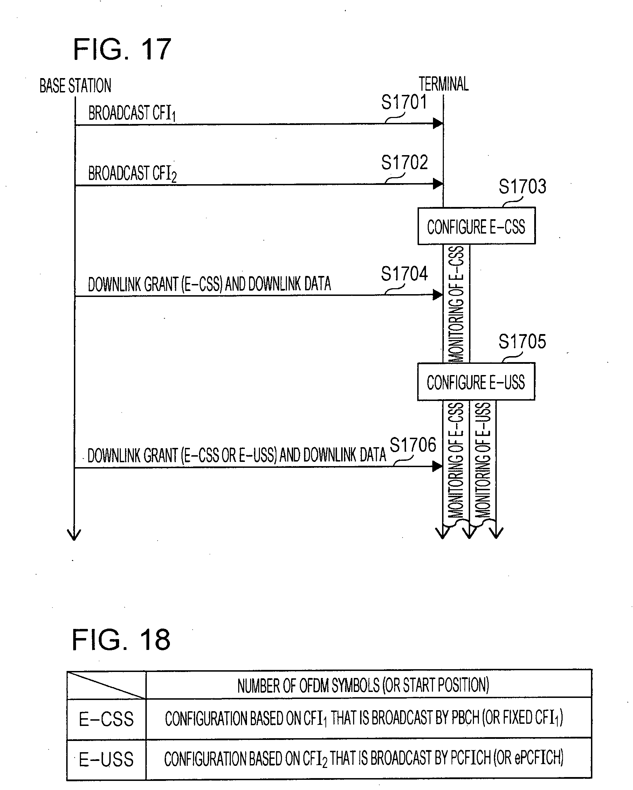

Fig. 17 is a diagram illustrating a flow of the transmission and reception of the downlink data between the base station 101 and the terminal 102. The base station 101 broadcasts the CFI₁ over the PBCH (Step S1701). The CFI₁ is a predetermined parameter. In a case where the CFI₁ is predetermined as a parameter that is common to the base station 101 and the terminal 102, Step S1701 is unnecessary. The base station 101 broadcasts the CFI₂ over the PCFICH or the ePCFICH (Step S1702). The terminal 102 configures the E-CSS based on the number of the OFDM symbols that are specified by the CFI₁ (Step S1703). When the E-CSS is configured, in the E-CSS that is configured, the terminal 102 monitors the E-PDCCH (a paging instruction, an SI instruction, a RA response instruction, and the like) that indicates the transmission data (the paging or system information, the random access, or the like) that is broadcast, the E-PDCCH (a normal DL grant) that indicates the normal transmission data that is intended for the terminal 102, the E-PDCCH (a UL grant) that gives an instruction for the data transmission from the terminal 102, and the like. In a case where there is a need for transmitting the transmission data that is broadcast (the paging or system information or the random access, or the like), transmitting the normal transmission data that is intended for the terminal 102 or data from the terminal 102, or the like, in the E-CSS, the base station 101 transmits the E-PDCCH (Step S1704). Furthermore, in the case where the E-PDCCH is the downlink grant, the transmission data for downlink is transmitted with the same subframe. Moreover, here, a case where before the terminal 102 configures the E-CSS, the base station 101 broadcasts the CFI₂ is illustrated, but the broadcasting of the CFI₁ is not limited to this. For example, because the PCFICH or the ePCFICH is inserted into every subframe, the base station 101 may broadcast the CFI₂ with every subframe.

The terminal 102 configures the E-USS based on the number of the OFDM symbols that are specified by the CFI₂ that is signaled (Step S1504). When the U-CSS is configured, in the U-CSS that is configured, the terminal 102 monitors the E-PDCCH (the normal DL grant) that indicates the normal transmission data that is intended for the terminal 102, the E-PDCCH (the UL grant) that gives an instruction for the data transmission from the terminal 102, and the like. In the case where there is a need for transmitting the normal transmission data that is intended for the terminal 102 or the data from the terminal 102, or the like, in the E-CSS or the E-USS, the base station 101 transmits the E-PDCCH (Step S1505). Furthermore, in the case where the E-PDCCH is the downlink grant, the transmission data for downlink is transmitted with the same subframe.

Fig. 18 is a diagram illustrating one example of a method of configuring the number of the OFDM symbols in the common search space and the terminal-specific search space. The base station 101 broadcasts the information indicating the CFI₁ that specifies the number (or the starting position) of the OFDM symbols in the E-CSS, over the PBCH. Alternatively, the information indicating the CFI₁ that specifies the number (or the starting position) of the OFDM symbols in the E-CSS is a fixed parameter, and is configured to be common to the base station 101 and the terminal 102. The base station 101 arranges the E-PDCCH in the E-CSS, based on the CFI₁, and the terminal 102 monitors the E-PDCCH in the E-CSS, based on the CFI₁. On the other hand, the base station 101 broadcasts information indicating the CFI₂ that specifies the number (or the starting position) of the OFDM symbols in the E-USS, over the PCFICH or the ePCFICH. The terminal 102 specifies the number (or the starting position) of the OFDM symbols in the E-USS, from the CFI₂ that is broadcast.

Moreover, an example in Fig. 18 illustrates a case where the number of the OFDM symbols for the E-CSS and the E-USS is configured, but the number of the OFDM symbols that are punctured may be configured in the E-CSS and the E-USS in the same manner as with the example according to the first embodiment in Fig. 14.

In this manner, in the E-CSS and the E-USS, the base station 101 individually configures the number of the OFDM symbols to which the E-PDCCH is substantially mapped (or is not substantially mapped). Furthermore, the number of the OFDM symbols to which the E-PDCCH is substantially mapped (or is not substantially mapped) in the E-CSS is fixed (the parameter that is broadcast over the PBCH can also be regarded as almost fixed (static)), and the base station 101 notifies the terminal 102 of the information specifying the number of the OFDM symbols to which the E-PDCCH is substantially mapped (or is not substantially mapped) in the E-USS, with a broadcast channel, over a broadcast channel that can dynamically change broadcast content, such as the PCFICH or the ePCFICH. Based on the fixed number of the OFDM symbols to which the E-PDCCH is substantially mapped (or, is not substantially mapped) in the E-CSS, the terminal 102 configures the E-CSS, and monitors the E-PDCCH in the E-CSS. Furthermore, the terminal 102 configures the E-USS, based on the information that specifies the number of the OFDM symbols to which the E-PDCCH is substantially mapped (or, is not substantially mapped) in the E-USS, and monitors the E-PDCCH in the E-USS.

Accordingly, a position of the search space can be configured to be common to the base station 101 and the terminal 102. Furthermore, because the E-CSS and the E-USS can be individually configured, it is possible to perform the efficient transmission and reception of the E-PDCCH. Particularly, in a case where the base station 101 performs at the same time the communication with the terminal 102 and the terminal 106 that uses the PDCCH, the overlapping of the PDCCH region by the E-CSS and E-USS can be controlled. Even though the PCFICH's that are widely distributed within the system band are not obtained, because the E-CSS that does not overlap the PDCCH region can be used, the terminal 102 can configure a reception band to be narrow, compared to the terminal that obtains the PCFICH. Moreover, even though dedicated signaling to the base station 101 is not performed, because the terminal 102 can use the E-CSS that does not overlap the PDCCH region, the transmission and reception of the E-PDCCH is possible in a case where a connection is not established like in a case of initial access. Furthermore, by broadcasting the information specifying the number of the OFDM symbols for the E-CSS in which the DL grant as to the paging or system information is arranged, common, efficient configuration can be performed on the multiple terminals. At the same time, the terminal 102 can configure the E-CSS to be static on the safe OFDM symbol in such a manner that the E-CSS does not overlap the PDCCH region, and the configuration of the E-USS can be adaptively changed according to the PDCCH region. Accordingly, the efficient use of the control channel can be performed.

In a case where the E-CSS space is fixed in such a manner that the E-CSS space does not overlap the PDCCH, the E-CSS and the PDCCH can be made not to interfere with each other. Furthermore, in a case where the E-CSS space is fixed in such a manner that the overlapping of the PDCCH is allowed (for example, the mapping begins with the leading symbol and the puncturing is not performed), the common mapping can be performed for the terminal in which the PDCCH region may be known and the terminal in which the PDCCH region may not be known. Accordingly, the E-PDCCH can be shared in the E-CSS in the terminal that can know the PDCCH region and the terminal that cannot know the PDCCH region. On the other hand, because the number of the OFDM symbols that are common to the terminals can be configured, according to the PDCCH region, in the E-USS to which only the E-PDCCH specific to the terminal is allocated, the inference with the PDCCH does not occur, and even though the PDCCH region is small, the efficient use of the resource can be performed by enlarging the E-PDCCH region.

### (Fourth Embodiment)

According to the first to third embodiments, the configuration of the CFI₁ and the CFI₂ between one base station and the terminal is described above. In contrast, according to a fourth embodiment, the configuration of the CFI₁ and the CFI₂ at the time of a handover (HO) between the base stations is described. The fourth embodiment of the present invention is described below. Moreover, the base station apparatus (source base station and a target base station) and the terminal apparatus according to the present embodiment can be realized with the same configuration as the configuration example of the base station 101 and the terminal 102 that are illustrated in Figs. 4 and 5. Furthermore, the base station apparatus and the terminal apparatus according to the present embodiment can be realized with the same configuration as the configuration examples of the frame and the channel that are illustrated in Figs. 2, 3 and 6 to 11. Accordingly, detailed descriptions of the repeated portions are not repeated.

Fig. 19 is a diagram illustrating a flow of the transmission and reception of the downlink data between the source base station that is a HO source, the target base station that is a HO destination, and the terminal 102. When the HO from the source base station to the target base station is determined, the source base station notifies the terminal 102 of information, such as system information on the target base station, a new ID of the terminal, and a random access resource, using the dedicated RRC signaling as a HO message. At this time, the information that specifies the CFI₁ and/or the CFI₂ is included in the HO message (Step S1901). After being synchronized with the target base station, the terminal 102 starts a random access procedure (Step S1902). Based on the number of the OFDM symbols that are specified by the CFI₁, the terminal 102 configures the E-CSS (Step S1903). When the E-CSS is configured, in the E-CSS that is configured, the terminal 102 monitors the random access response, the E-PDCCH (the UL grant) that gives an instruction to transmit data from the terminal 102 to the target base station, or the like. In the E-CSS, the target base station 101 transmits the random access response (Step S1904). Furthermore, in the E-CSS, the target base station 101 transmits the E-PDCCH (the UL grant) (Step S1905). The terminal 102 transmits a notification that the RRC is completely reconfigured (Step S1906).

Based on the number of the OFDM symbols that are specified by the CFI₂ that is signaled, the terminal 102 configures the E-USS (Step S1907). When the U-CSS is configured, in the U-CSS that is configured, the terminal 102 monitors the E-PDCCH (the normal DL grant) that indicates the normal transmission data that is intended for the terminal 102, the E-PDCCH (the UL grant) that gives an instruction for the data transmission from the terminal 102, and the like. In the case where there is a need for transmitting the normal transmission data that is intended for the terminal 102 or the data from the terminal 102, or the like, in the E-CSS or the E-USS, the base station 101 transmits the E-PDCCH (Step S 1908). Furthermore, in the case where the E-PDCCH is the downlink grant, the transmission data for downlink is transmitted with the same subframe.

Fig. 20 is a diagram illustrating one example of a method of configuring the number of the OFDM symbols in the common search space and the terminal-specific search space. The source base station notifies the terminal 102 of the HO message including the information indicating the CFI₁ that specifies the number (or the starting position) of the OFDM symbols in the E-CSS, and the information indicating the CFI₁ that specifies the number (or the starting position) of the OFDM symbols in the E-CSS. A target base station arranges the E-PDCCH in the E-CSS, based on the CFI₁, and the terminal 102 monitors the E-PDCCH in the E-CSS, based on the CFI₁. On the other hand, the target base station arranges the E-PDCCH in the E-USS, based on the CFI₂, and the terminal 102 monitors the E-PDCCH in the E-USS, based on the CFI₂.

Moreover, an example in Fig. 20 illustrates a case where the number of the OFDM symbols for the E-CSS and the E-USS is configured, but the number of the OFDM symbols that are punctured may be configured in the E-CSS and the E-USS in the same manner as with the example according to the first embodiment in Fig. 14.

In this manner, the source base station individually configures the number of the OFDM symbols to which the target base station substantially maps (or does not substantially map) the E-PDCCH in the E-CSS and the E-USS. Furthermore, the terminal 102 configures the E-CSS and the E-USS, based on the information that specifies the number of the OFDM symbols to which the E-PDCCH is substantially mapped (or, is not substantially mapped) in each of the E-CSS and the E-USS, and monitors the E-PDCCH in the E-CSS and the E-USS.

Accordingly, the position of the search space can be configured to be common to the target base station and the terminal 102. Furthermore, because the E-CSS and the E-USS can be individually configured, it is possible to perform the efficient transmission and reception of the E-PDCCH.

Moreover, according to each of the embodiments described above, the terminal detects the PDCCH or the E-PDCCH in the CSS, but the number of the OFDM symbols to which the E-PDCCH is substantially mapped is changed according to whether the PDCCH or the E-PDCCH is detected in the USS. However, instead of the SS, even though the change is made according to a DCI format, an effect similar to that according to each of the embodiments described above can be obtained. More specifically, the terminal detects the DCI format that is available for the transmission in the CSS, as the PDCCH or the E-PDCCH, the number of the OFDM symbols to which the E-PDCCH is substantially mapped being changed according to whether he DCI format is detected that is available for the transmission in only the USS. Furthermore, the base station transmits the DCI format that is available for the transmission in the CSS, as the PDCCH or the E-PDCCH, but the number of the OFDM symbols to which the E-PDCCH is substantially mapped is changed according to whether the DCI format is detected that is available for the transmission in only the USS.

Moreover, according to each of the embodiments, the resource element or the resource block is described as being used as a unit for mapping the data channel, the control channel, the PDSCH, the PDCCH, and the reference signal, and the subframe or the radio frame is described as being used as a unit of transmission in a time direction, but the present invention is not limited to this. Even though, instead of these, the space and the time unit that are configured from an arbitrary frequency and time, are used, the same effect can be obtained.

Furthermore, according to each of the embodiments described above, the enhanced physical downlink control channel that is arranged in the PDSCH region is called the E-PDCCH and the description is provided in such a manner that the enhanced physical downlink control channel is clearly distinguished from a physical downlink control channel (PDCCH) in the related art, but the present invention is not limited to this. Even though the E-PDCCH and the PDCCH are called the PDCCH, if different operations are performed in the enhanced physical downlink control channel that is typically arranged in the PDSCH region and in the physical downlink control channel in the related art that is arranged in the PDCCH region, substantially the same effect as in the embodiments described above in each of which the E-PDCCH and the PDCCH are distinguished from each other is obtained.

Moreover, in a case where the terminal starts to communicate with the base station, the terminal notifies the base station of information (information on the ability of the terminal, or functional block information) indicating whether or not the function that is mentioned according to each of the embodiments described above is usable with respect to the base station. Thus, the base station can determine whether or not the function that is mentioned according to each of the embodiments described above is usable. More specifically, in a case where the function that is mentioned according to each of the embodiments described above is usable, information to that effect may be included in the information on the ability of the terminal, and in a case where the function that is mentioned according to each of the embodiments described above is not usable, information relating to that function may not be included in the information on the ability of the terminal. Alternatively, in a case where the function that is mentioned according to each of the embodiments described above is usable, a value of 1 may be entered into a predetermined bit field of the functional group information, and in a case where the function that is mentioned according to each of the embodiments described above is not usable, a value of 0 may be entered into the predetermined bit field of the functional group information.

A program running on the base station and the terminal according to the present invention is a program (a program for causing a computer to operate) that controls a CPU and the like in such a manner as to realize the function according to the embodiment of the present invention. Then, the information that is handled in these apparatuses is temporarily stored in a RAM while being processed. Thereafter, the information is stored in various ROM's or HDD's, and whenever necessary, is read by the CPU to be modified or written. As a recording medium on which the program is stored, among a semiconductor (for example, a ROM, a nonvolatile memory card, and the like), an optical storage medium (for example, a DVD, a MO, a MD, a CD, a BD, and the like), a magnetic storage medium (for example, a magnetic tape, a flexible disk, and the like), and the like, any one may be possible. Furthermore, in some cases, the function according to the embodiment described above is realized by running the loaded program, and in addition, the function according to the present invention is realized in conjunction with an operating system or other application programs, based on an instruction from the program.

Furthermore, in a case where the programs are available on the market, the program stored on a portable recording medium can be distributed or the program can be transmitted to a server computer that connects through a network such as the Internet. In this case, a storage device in the server computer also is included in the present invention. Furthermore, some or all of the base station and the terminal according to the embodiment described above may be realized as an LSI that is a typical integrated circuit. Each functional block of the base station and the terminal may be individually built into a chip, and some or all functional blocks may be integrated into a chip. Furthermore, a technique of the integrated circuit is not limited to the LSI, and an integrated circuit for the functional block may be realized with a dedicated circuit or a general-purpose processor. Furthermore, if with advances in a semiconductor technology, a technology of an integrated circuit that substitutes for the LSI appears, it is also possible to use an integrated circuit to which the technology applies.

The invention is defined by the appended claims 1-5.

### INDUSTRIAL APPLICABILITY

The present invention is suitable for use in a wireless base station apparatus, a wireless terminal apparatus, a wireless communication system, or a wireless communication method.

### DESCRIPTION OF REFERENCE NUMERALS

101 BASE STATION
102, 106 TERMINAL
103 ENHANCED PHYSICAL DOWNLINK CONTROL CHANNEL IN COMMON SEARCH SPACE
104 DOWNLINK TRANSMISSION DATA
105 ENHANCED PHYSICAL DOWNLINK CONTROL CHANNEL IN TERMINAL-SPECIFIC SEARCH SPACE
107 PHYSICAL DOWNLINK CONTROL CHANNEL
401 CODEWORD GENERATION UNIT
402 DOWNLINK SUBFRAME GENERATION UNIT
403 PHYSICAL DOWNLINK CONTROL CHANNEL GENERATION UNIT
404 OFDM SIGNAL TRANSMITTING UNIT
405, 511 TRANSMIT ANTENNA
406, 501 RECEIVE ANTENNA
407 SC-FDMA SIGNAL RECEIVING UNIT
408 UPLINK SUBFRAME PROCESSING UNIT
409, 506 HIGHER LAYER
502 OFDM SIGNAL RECEIVING UNIT
503 DOWNLINK SUBFRAME PROCESSING UNIT
504 PHYSICAL DOWNLINK CONTROL CHANNEL EXTRACTION UNIT
505 CODEWORD EXTRACTION UNIT
507 UPLINK SUBFRAME GENERATION UNIT
508 SC-FDMA SIGNAL TRANSMITTING UNIT
2101 BASE STATION
2102 TERMINAL
2103 PHYSICAL DOWNLINK CONTROL CHANNEL IN COMMON SEARCH SPACE
2104 DOWNLINK TRANSMISSION DATA
2105 PHYSICAL DOWNLINK CONTROL CHANNEL IN TERMINAL-SPECIFIC SEARCH SPACE

## Claims

1. A terminal (102) configured to communicate with a base station (101), the terminal comprising:
a downlink subframe processing unit (503) configured to receive a first physical channel which is allocated with six resource blocks of which location is pre-defined, the first physical channel carrying a first broadcast information, and
the downlink subframe processing unit (503) being configured to monitor an enhanced physical downlink control channel in an enhanced physical downlink control channel common search space, wherein a first starting OFDM symbol is specified by the first broadcast information, and the enhanced physical downlink control channel is an enhanced physical downlink control channel related to paging.

2. The terminal according to claim 1,
wherein the first physical channel is different from a physical broadcast channel.

3. The terminal according to claim 1,
wherein a physical shared channel carrying a transport block is received using a second starting OFDM symbol.

4. A communication method for a terminal (102) configured to communicate with a base station (101), the communication method comprising:
receiving a first physical channel which is allocated with six resource blocks of which location is pre-defined, the first physical channel carrying a first broadcast information; and
monitoring an enhanced physical downlink control channel in an enhanced physical downlink control channel common search space, wherein a first starting OFDM symbol is specified by the first broadcast information, and the enhanced physical downlink control channel is an enhanced physical downlink control channel related to paging.

5. An integrated circuit mountable on a terminal (102) configured to communicate with a base station (101), the integrated circuit comprising:
a downlink subframe processing unit (503) configured to receive a first physical channel which is allocated with six resource blocks of which location is pre-defined, the first physical channel carrying a first broadcast information, and
the downlink subframe processing unit (503) being configured to monitor an enhanced physical downlink control channel in an enhanced physical downlink control channel common search space, wherein a first starting OFDM symbol is specified by the first broadcast information, and the enhanced physical downlink control channel is an enhanced physical downlink control channel related to paging.

## Patentansprüche

1. Endgerät (102), das ausgestaltet ist, mit einer Basisstation (101) zu kommunizieren, wobei das Endgerät umfasst:
eine Downlink-Teilrahmenverarbeitungseinheit (503), die ausgestaltet ist, einen ersten physikalischen Kanal zu empfangen, dem sechs Ressourcenblöcke zugeordnet sind, deren Standort vorbestimmt ist, wobei der erste physikalische Kanal eine erste Rundfunkinformation trägt, und
wobei die Downlink-Teilrahmenverarbeitungseinheit (503) ausgestaltet ist, einen verbesserten physikalischen Downlink-Steuerkanal in einem allgemeinen Suchbereich für verbesserte physikalische Downlink-Steuerkanäle zu überwachen, wobei ein erstes startendes OFDM-Symbol von der ersten Rundfunkinformation vorgegeben ist, und der verbesserte physikalische Downlink-Steuerkanal ein verbesserter physikalischer Downlink-Steuerkanal in Bezug auf das Paging ist.

2. Endgerät nach Anspruch 1, wobei sich der erste physikalische Kanal von einem physikalischen Rundfunkkanal unterscheidet.

3. Endgerät nach Anspruch 1, wobei ein physikalischer gemeinsam genutzter Kanal, der einen Transportblock trägt, unter Verwendung eines zweiten startenden OFDM-Symbols empfangen wird.

4. Kommunikationsverfahren für ein Endgerät (102), das ausgestaltet ist, mit einer Basisstation (101) zu kommunizieren, wobei das Kommunikationsverfahren umfasst:
Empfangen eines ersten physikalischen Kanals, dem sechs Ressourcenblöcke zugeordnet sind, deren Standort vorbestimmt ist, wobei der erste physikalische Kanal eine erste Rundfunkinformation trägt; und
Überwachen eines verbesserten physikalischen Downlink-Steuerkanals in einem allgemeinen Suchbereich für verbesserte physikalische Downlink-Steuerkanäle, wobei ein erstes startendes OFDM-Symbol von der ersten Rundfunkinformation vorgegeben ist, und der verbesserte physikalische Downlink-Steuerkanal ein verbesserter physikalischer Downlink-Steuerkanal in Bezug auf das Paging ist.

5. Integrierter Schaltkreis, der auf einem Endgerät (102), das ausgestaltet ist, um mit einer Basisstation (101) zu kommunizieren, montiert werden kann, wobei der integrierte Schaltkreis umfasst:
eine Downlink-Teilrahmenverarbeitungseinheit (503), die ausgestaltet ist, einen ersten physikalischen Kanal zu empfangen, dem sechs Ressourcenblöcke zugeordnet sind, deren Standort vorbestimmt ist, wobei der erste physikalische Kanal eine erste Rundfunkinformation trägt, und
wobei die Downlink-Teilrahmenverarbeitungseinheit (503) ausgestaltet ist, einen verbesserten physikalischen Downlink-Steuerkanal in einem allgemeinen Suchbereich für verbesserte Downlink-Steuerkanäle zu überwachen, wobei ein erstes startendes OFDM-Symbol von der ersten Rundfunkinformation vorgegeben ist, und der verbesserte physikalische Downlink-Steuerkanal ein verbesserter physikalischer Downlink-Steuerkanal in Bezug auf das Paging ist.

## Revendications

1. Terminal (102) configuré pour communiquer avec une station de base (101), le terminal comprenant :
une unité de traitement de sous-trame de liaison descendante (503) configurée pour recevoir un premier canal physique qui est attribué avec six blocs de ressource dont l'emplacement est prédéfini, le premier canal physique transportant une première information de diffusion, et
l'unité de traitement de sous-trame de liaison descendante (503) étant configurée pour surveiller un canal de commande de liaison descendante physique amélioré dans un espace de recherche commun de canal de commande de liaison descendante physique amélioré, dans lequel un premier symbole OFDM de départ est indiqué par la première information de diffusion, et le canal de commande de liaison descendante physique amélioré est un canal de commande de liaison descendante physique amélioré lié à une radiomessagerie.

2. Terminal selon la revendication 1,
dans lequel le premier canal physique est différent d'un canal de diffusion physique.

3. Terminal selon la revendication 1,
dans lequel un canal partagé physique transportant un bloc de transport est reçu en utilisant un second symbole OFDM de départ.

4. Procédé de communication pour un terminal (102) configuré pour communiquer avec une station de base (101), le procédé de communication comprenant :
la réception d'un premier canal physique qui est attribué avec six blocs de ressource dont l'emplacement est prédéfini, le premier canal physique transportant une première information de diffusion ; et
la surveillance d'un canal de commande de liaison descendante physique amélioré dans un espace de recherche commun de canal de commande de liaison descendante physique amélioré, dans lequel un premier symbole OFDM de départ est indiqué par la première information de diffusion, et le canal de commande de liaison descendante physique amélioré est un canal de commande de liaison descendante physique amélioré lié à une radiomessagerie.

5. Circuit intégré pouvant être monté sur un terminal (102) configuré pour communiquer avec une station de base (101), le circuit intégré comprenant :
une unité de traitement de sous-trame de liaison descendante (503) configurée pour recevoir un premier canal physique qui est attribué avec six blocs de ressource dont l'emplacement est prédéfini, le premier canal physique transportant une première information de diffusion, et
l'unité de traitement de sous-trame de liaison descendante (503) étant configurée pour surveiller un canal de commande de liaison descendante physique amélioré dans un espace de recherche commun de canal de commande de liaison descendante physique amélioré, dans lequel un premier symbole OFDM de départ est indiqué par la première information de diffusion, et le canal de commande de liaison descendante physique amélioré est un canal de commande de liaison descendante physique amélioré lié à une radiomessagerie.
